# DEMANDE DE BREVET EUROPEEN

(11) **EP 4 847 751 A1**
(43) Date de publication de la demande: **02.12.2026**
(21) Numéro de dépôt: 26168188.6
(22) Date de dépôt: 26.03.2026
(51) Int. Cl.: F02C 3/10, B64D 33/04, F01D 25/30

(54) **TUYÈRE D'ECHAPPEMENT D'UN TURBOMOTEUR DONT LA SORTIE EST INCLINÉE PAR RAPPORT À L'AXE DE ROTATION DU TURBOMOTEUR ET INSTALLATION MOTRICE**

(30) Priorité: 28.05.2025 FR 2505811
(71) Demandeur: Airbus Helicopters, 13725 Marignane Cedex (FR)
(72) Inventeur: HONNORAT, Olivier, 13090 AIX EN PROVENCE (FR); RANAIVOSON, Jonathan, 13002 MARSEILLE (FR); DUBOURG, Christophe, 13100 LE THOLONET (FR)
(74) Mandataire: GPI Brevets

(57) **Abrégé**

La présente invention concerne une tuyère d'échappement (1) comportant une section d'entrée (10) annulaire autour d'un axe (AX). Un diffuseur (20) comporte des premières parois intérieure (23) et extérieure (24) et communique fluidiquement, dans un secteur angulaire d'entrée, avec une chambre de tranquillisation (30) limitée par ledit diffuseur (20) et par une seconde paroi extérieure (31) prolongeant ladite première paroi intérieure (23) jusqu'à ladite première paroi extérieure (24). Ledit diffuseur (20) et ladite chambre de tranquillisation (30) débouchent dans un tronçon de détente (40) dans un secteur angulaire de sortie. Une tangente (245,246) de ladite première paroi extérieure (24) à son extrémité libre (243) forme avec ledit axe (AX) un angle de tangence aigu (*θ*) plus faible dans ledit secteur angulaire d'entrée que dans ledit secteur angulaire de sortie. Une première distance (L1) séparant ledit axe (AX) et ladite extrémité libre (243) est plus faible dans ledit secteur angulaire d'entrée que dans ledit secteur angulaire de sortie.

## Description

La présente invention est du domaine des turbines à gaz et plus particulièrement des turbines à gaz destinées aux aéronefs à voilures tournantes.

La présente invention concerne une tuyère d'échappement destinée à une turbine à gaz ainsi qu'une installation motrice munie d'au moins une turbine à gaz et d'au moins une telle tuyère d'échappement.

Les aéronefs à voilures tournantes sont généralement équipés d'un ou de plusieurs turbomoteurs afin d'assurer, par l'intermédiaire d'au moins un rotor principal, sa sustentation, voire sa propulsion. Un turbomoteur est une turbine à gaz comportant généralement, pour une application à un aéronef à voilure tournante, une turbine libre entraînant en rotation au moins un rotor principal de l'aéronef. Le fonctionnement du turbomoteur doit alors optimiser la puissance fournie par cette turbine libre en limitant notamment les pertes d'énergie dans les gaz échappement, en particulier en aval de cette turbine libre.

Les gaz d'échappement sont rejetés de la turbine libre à grande vitesse et à une pression supérieure à la pression atmosphérique et circulent alors dans une tuyère d'échappement jusqu'à être évacués dans l'atmosphère. Cette tuyère d'échappement a notamment pour fonction d'orienter ces gaz d'échappement vers une sortie et de détendre ces gaz d'échappement pour les amener à la pression atmosphérique.

Afin de réaliser cette détente, une tuyère d'échappement réduit progressivement la vitesse des gaz d'échappement. Cependant, cette détente génère des pertes de charge de ces gaz d'échappement dans la tuyère d'échappement, dues notamment aux turbulences générées sur ces gaz d'échappement ainsi qu'au frottement de ces gaz d'échappement avec les parois de la tuyère. Ces pertes de charge entraînent alors une perte d'énergie de l'installation motrice formée par le turbomoteur et la tuyère d'échappement et, par suite, une baisse des performances du turbomoteur.

Il est couramment admis qu'une variation de 1% des pertes de charge dans la tuyère d'échappement se traduit par une variation identique de 1% de la puissance du turbomoteur et une variation identique de 1% de la consommation spécifique de ce turbomoteur. De plus, le fonctionnement du turbomoteur peut également se trouver impacté par ces pertes de charge élevées au niveau de la tuyère d'échappement, par exemple par une réduction de sa marge au pompage.

La réduction des pertes de charge susceptibles d'être générées sur les gaz d'échappement par une tuyère d'échappement est donc fondamentale afin d'optimiser les performances d'un turbomoteur. Lorsque ce turbomoteur équipe un aéronef à voilure tournante, ces pertes de charge entraînant une perte de puissance du turbomoteur sont alors préjudiciables au fonctionnement général de l'aéronef et plus spécifiquement pour certaines phases de vol particulières, telles que les phases de décollage, d'atterrissage et de vol stationnaire.

Généralement, une tuyère d'échappement est installée en ligne avec le turbomoteur, selon l'axe de rotation du turbomoteur, la tuyère étant alors de forme « simple ». La tuyère d'échappement comporte par exemple une tuyère de détente de forme divergente, tel un tronc de cône à génératrice droite, voire curviligne, dont la section augmente progressivement pour réduire la vitesse de circulation des gaz d'échappement, conformément à la loi de conservation du débit masse. Ce type de tuyère d'échappement « simple » est le plus efficace afin de limiter les pertes de charge, ces pertes de charge étant généralement de l'ordre de 1%.

Par ailleurs, une tuyère d'échappement peut également comporter une tuyère de sortie permettant d'orienter les gaz d'échappement en sortie de la tuyère d'échappement vers une direction légèrement inclinée par rapport à l'axe de rotation du turbomoteur. Cette tuyère de sortie, dite « tuyère secondaire », est alors installée au bout de la tuyère de détente, dite « tuyère primaire », les gaz d'échappement ayant été préalablement ralentis. C'est par exemple le cas sur un aéronef à voilure tournante muni de deux turbomoteurs, les tuyères d'échappement de chaque turbomoteur comportant une tuyère secondaire coudée afin d'évacuer les gaz d'échappement sur les côtés de l'aéronef. Une telle tuyère secondaire coudée a souvent pour effet de doubler les pertes de charge par rapport à une tuyère d'échappement « simple ». Sur certains aéronefs bimoteur, cette tuyère secondaire coudée peut par exemple former avec la tuyère primaire un angle allant jusqu'à 80 degrés (80°) ou 90°, c'est-à-dire de sorte que la sortie des gaz d'échappement est sensiblement perpendiculaire à l'axe du turbomoteur.

En outre, certaines implantations des turbomoteurs sur un aéronef imposent à la tuyère d'échappement de réaliser un virage serré pour « échapper » un obstacle, tel qu'une cloison « pare-feu », un capot moteur ou bien une contrainte d'installation. Ce virage serré peut aller jusqu'à un coude à angle droit pour évacuer les gaz sur le côté de l'aéronef. De plus, ce virage serré peut être situé relativement proche de la sortie de la turbine libre du turbomoteur, les dimensions de la tuyère de détente étant alors réduites. De fait, la vitesse des gaz d'échappement ne peut pas être réduite suffisamment par cette tuyère de détente avant d'atteindre ce virage serré, générant alors des pertes de charge relativement importantes.

Par ailleurs, une turbine à gaz peut être équipée d'une tuyère secondaire mobile afin d'orienter les gaz d'échappement. Par exemple, un système de déviation des gaz d'échappement d'une turbine à gaz, selon le document FR 2010251, est muni de deux segments mobiles en rotation afin d'orienter le flux des gaz d'échappement perpendiculairement à l'axe de la turbine, selon un cheminement circulaire.

Le document EP 0118181 décrit quant à lui un dispositif de déflection du trajet de circulation des gaz d'échappement d'un moteur à réaction. Ce dispositif de déflection comporte des parties mobiles pouvant former un premier trajet de circulation incurvé, des aubes de guidage se positionnant au milieu de ce premier trajet de circulation incurvé. Lorsque ces parties mobiles forment un second trajet de circulation selon l'axe du moteur, les aubes de guidage se positionnent alors le long de ce second trajet de circulation.

On connait également le document EP 1104847 qui décrit une tuyère de sortie d'une turbine à gaz comportant une tuyère primaire et une tuyère secondaire sensiblement coaxiales, la tuyère primaire étant située à l'intérieure de la tuyère secondaire et dépassant axialement de cette tuyère secondaire. Les sections de sortie de ces tuyères primaire et secondaire sont inclinées vis-à-vis d'une direction perpendiculaire à leur axe commun, permettant notamment ainsi de réduire le bruit généré par cette turbine à gaz.

Le document EP 2357323 décrit un diffuseur de gaz d'échappement pour une turbine à gaz. Ce diffuseur comporte une entrée annulaire et deux conduites d'échappement permettant l'évacuation des gaz d'échappement. Quatre ouvertures radiales permettent aux gaz d'échappement de circuler de l'entrée annulaire vers les deux conduites. Les quatre ouvertures radiales couvrent la totalité de la périphérie de l'entrée annulaire.

Le document FR 3030633 concerne une tuyère primaire d'échappement d'une turbine à gaz permettant d'orienter les gaz d'échappement à au moins 90°, voire à plus de 120°, de l'axe de la turbine libre. Cette tuyère primaire d'échappement comporte une section d'entrée annulaire centrée sur l'axe de la turbine à gaz, un diffuseur, une chambre de tranquillisation et un tronçon de détente. Le diffuseur s'étend autour de l'axe, selon une forme divergente. La chambre de tranquillisation s'étend également autour de l'axe de rotation et est limitée, d'une part, par le diffuseur et, d'autre part, par une paroi extérieure de la tuyère primaire d'échappement.

Le document US 2009/0246010 décrit une turbine à gaz comportant également une section d'entrée annulaire, un diffuseur, une chambre de tranquillisation et un tronçon de détente.

Enfin, les documents US 2017/0198608, US 2021/0180470 et JP 2014/005813 décrivent des tuyères d'échappement pour une turbine à vapeur. Selon le document US 2017/0198608, la tuyère d'échappement comporte une section d'entrée annulaire centrée sur l'axe de la turbine, et dans laquelle se trouvent des aubes fixes et des aubes mobiles. La tuyère d'échappement comporte également un diffuseur s'étendant autour de l'axe de la turbine. Les gaz d'échappement de la turbine sont évacués, via le diffuseur de la tuyère d'échappement, vers l'extérieur de la tuyère.

La tuyère d'échappement décrite par le document US 2021/0180470 comporte un boîtier muni d'un carter intérieur, d'un carter d'échappement, d'un guide d'écoulement et d'une surface extérieure. Une pluralité d'aubes sont disposées dans un premier espace de forme annulaire situé à l'intérieur du carter intérieur. Un diffuseur est formé entre le carter d'échappement et la surface extérieure. Une enveloppe extérieure entoure un deuxième espace dans lequel la vapeur s'écoulant à travers le premier espace et le diffuseur est évacuée, ce deuxième espace s'étendant sur le côté périphérique extérieur du diffuseur. L'enveloppe extérieure guide la vapeur s'écoulant du diffuseur dans le deuxième espace, puis vers un orifice d'échappement sur un premier côté. La tuyère d'échappement présente ainsi une forme asymétrique visant à réduire les pertes d'échappement.

Pour toutes ces configurations, la maîtrise des pertes de charge et la recherche de la meilleure géométrie de la tuyère d'échappement est un enjeu primordial afin de ne pas dégrader les performances des moteurs. Par ailleurs, les pertes de charge d'un fluide sont principalement proportionnelles au carré de la vitesse de ce fluide. De fait, les gaz d'échappement sortant de la turbine libre d'un turbomoteur à grande vitesse, il est important de réduire rapidement cette vitesse afin de limiter ces pertes de charge.

La présente invention a alors pour objet une tuyère d'échappement destinée à une turbine à gaz permettant d'orienter les gaz d'échappement de cette turbine à gaz tout en s'affranchissant des limitations mentionnées ci-dessus et notamment en réduisant la vitesse de circulation des gaz d'échappement sortant de la turbine à gaz et, de fait, en limitant les pertes de charge de ces gaz d'échappement jusqu'à leurs sorties de la tuyère d'échappement.

Selon l'invention, une tuyère d'échappement destinée à une turbine à gaz comporte successivement selon le sens de circulation d'un gaz au travers de la tuyère d'échappement :
- une section d'entrée annulaire et centrée sur un axe,
- un diffuseur s'étendant autour de l'axe selon une première forme divergente allant de la section d'entrée vers une chambre de tranquillisation, le diffuseur comportant une première paroi intérieure et une première paroi extérieure, le gaz circulant entre les premières parois intérieure et extérieure, la première paroi extérieure s'étendant depuis la section d'entrée jusqu'à une extrémité libre,

- la chambre de tranquillisation étant délimitée par la première paroi extérieure et une seconde paroi extérieure prolongeant la première paroi intérieure, et
- une tronçon de détente communiquant à une première extrémité avec la chambre de tranquillisation et le diffuseur.

La tuyère d'échappement selon l'invention est particulièrement destinée à une turbine à gaz, le gaz traversant la tuyère d'échappement étant alors constitué par les gaz d'échappement de cette turbine à gaz. Ces gaz d'échappement sortent de la turbine à gaz, puis entrent dans la tuyère d'échappement par la section d'entrée annulaire et circulent ensuite dans le diffuseur et la chambre de tranquillisation de la tuyère d'échappement avant d'atteindre le tronçon de détente. On utilisera par la suite le terme « gaz » pour désigner les gaz d'échappement. La tuyère d'échappement selon l'invention associée à une turbine à gaz peut notamment équiper un aéronef, et plus particulièrement un aéronef à voilure tournante.

L'axe de la section d'entrée annulaire est alors confondu avec l'axe de rotation de cette turbine à gaz. Un premier sens peut être défini parallèlement à cet axe et est orienté selon le sens de circulation des gaz d'échappement.

Lorsqu'il traverse le tronçon de détente, les gaz d'échappement voient leur pression diminuer jusqu'à leur sortie de ce tronçon de détente par une section de détente grâce à une seconde forme divergente de ce tronçon de détente. Cette seconde forme divergente a une section de passage dont la superficie augmente progressivement du diffuseur et de la chambre de tranquillisation vers la section de détente.

On entend par « section de passage » une surface intérieure de cette seconde forme divergente qui est perpendiculaire à une direction moyenne de circulation d'un gaz dans cette seconde forme divergente du tronçon de détente. La direction moyenne de circulation d'un gaz dans une forme quelconque est définie lors d'un écoulement laminaire de ce gaz dans cette forme et est la moyenne des directions de circulation de ce gaz.

Cette seconde forme divergente est par exemple un tronc de cône à génératrice droite ou bien comporte des parois de forme curviligne, la direction moyenne de circulation des gaz d'échappement étant alors l'axe de ce tronc de cône. Un second sens peut être défini parallèlement à la direction moyenne de sortie des gaz d'échappement du tronçon de détente, au niveau de la section de détente, et donc parallèlement à un axe du tronçon de détente. Ce second sens est orienté selon le sens de circulation des gaz d'échappement.

Cette tuyère d'échappement selon l'invention est remarquable en ce qu'une première distance séparant l'axe et l'extrémité libre dans chaque plan radial passant par l'axe, cette première distance est plus faible dans un secteur angulaire d'entrée opposé au tronçon de détente par rapport à l'axe que dans un secteur angulaire de sortie, le diffuseur débouchant dans la chambre de tranquillisation, via une section de sortie, dans le secteur angulaire d'entrée, le diffuseur et la chambre de tranquillisation débouchant dans le tronçon de détente dans le secteur angulaire de sortie.

De plus, la tuyère d'échappement selon l'invention est également remarquable en ce qu'une tangente de la première paroi extérieure à l'extrémité libre dans les plans radiaux forme avec une direction parallèle à l'axe un angle de tangence aigu plus faible dans le secteur angulaire d'entrée que dans le secteur angulaire de sortie.

Dans chaque plans radial, cette direction parallèle à l'axe passe par l'extrémité libre.

La tuyère d'échappement selon l'invention permet ainsi de réaliser une diffusion du gaz entrant par la section d'entrée annulaire et son éjection par le tronçon de détente, le volume axial de cette tuyère d'échappement étant réduit. La difficulté à laquelle fait face cette tuyère d'échappement est alors de limiter les pertes de charge subies par ce gaz en la traversant afin de ne pas dégrader par exemple les performances de la turbine à gaz reliée à cette tuyère d'échappement.

Le diffuseur qui reçoit le gaz entrant par la section annulaire comporte ainsi deux premières parois intérieure et extérieure entre lesquelles le gaz circule de la section d'entrée annulaire vers la chambre de tranquillisation ainsi que vers le tronçon de détente. Les premières parois intérieure et extérieure s'écartent progressivement de l'axe de la section d'entrée en s'éloignant de la section d'entrée annulaire, notamment jusqu'à l'extrémité libre pour la première paroi extérieure. De la sorte les premières parois intérieure et extérieure constituent une première forme divergente s'étendant autour de l'axe et dont la superficie de la section de passage du gaz augmente progressivement en s'éloignant de la section d'entrée annulaire.

Cette augmentation de la superficie de la section de passage est progressive, régulière et faible afin de permettre un écoulement le plus calme possible tout en réduisant la vitesse de circulation de ce gaz.

En particulier, la circulation du gaz dans le diffuseur peut ainsi être en partie laminaire grâce notamment à la première forme divergente. Ce gaz subit alors peu de pertes de charge tout en voyant sa vitesse de circulation réduite en traversant le diffuseur. De plus, les géométries des premières parois intérieure et extérieure peuvent permettre avantageusement qu'il n'y ait pas de décollement de la couche limite du gaz sur ces premières parois intérieure et extérieure. Au minimum, un tel décollement de la couche limite du gaz peut se produire sur la première paroi intérieure et/ou sur la première paroi extérieure en étant retardé et se situe dans la partie terminale du diffuseur, c'est-à-dire proche de l'extrémité libre et de la section de sortie.

De plus, le diffuseur débouche dans la chambre de tranquillisation dans le secteur angulaire d'entrée alors que le diffuseur débouche directement dans le tronçon de détente dans le secteur angulaire de sortie. La chambre de tranquillisation débouche également dans le tronçon de détente dans le secteur angulaire de sortie. De plus, la seconde paroi extérieure de la chambre de tranquillisation prolonge la première paroi intérieure du diffuseur et rejoint la première paroi extérieure du diffuseur dans le secteur angulaire d'entrée de sorte à refermer la chambre de tranquillisation dans ce secteur angulaire d'entrée, qui communique alors uniquement avec le diffuseur dans ce secteur angulaire d'entrée. Dans le secteur angulaire de sortie, la seconde paroi extérieure de la chambre de tranquillisation prolonge également la première paroi intérieure du diffuseur, mais rejoint une paroi du tronçon de détente. La chambre de tranquillisation s'étend également autour de l'axe.

En conséquence, un premier flux du gaz circule tout d'abord dans le diffuseur, et est dirigé dans la chambre de tranquillisation avant d'arriver dans le tronçon de détente, alors qu'un second flux du gaz passe directement du diffuseur au tronçon de détente.

La géométrie de la première paroi extérieure du diffuseur dans le secteur angulaire d'entrée est différente de la géométrie de la première paroi extérieure située dans le secteur angulaire de sortie pour s'adapter aux chemins de circulation différents de ces premier et second flux du gaz.

Ces différences se caractérisent notamment par des tangentes de la première paroi extérieure à l'extrémité libre et par des premières distances séparant l'axe et cette extrémité libre, dans chaque plan radial passant par l'axe, respectivement différentes dans le secteur angulaire d'entrée et dans le secteur angulaire de sortie.

Ainsi, dans chaque plan radial, un angle de tangence aigu entre cette tangente et l'axe est plus grand dans le secteur angulaire de sortie que dans le secteur angulaire d'entrée et la première distance est également plus grande dans le secteur angulaire de sortie que dans le secteur angulaire d'entrée.

En conséquence, le premier flux du gaz circule dans le secteur angulaire d'entrée tout d'abord dans le diffuseur afin de réduire une première fois sa vitesse, puis entre dans la chambre de tranquillisation où sa vitesse peut de nouveau être réduite avant d'atteindre le tronçon de détente. L'angle de tangence aigu plus faible dans le secteur angulaire d'entrée permet une diffusion homogène de ce premier flux du gaz dans la chambre de tranquillisation tout en limitant voire évitant l'apparition de turbulences.

Dans le secteur angulaire de sortie, le second flux du gaz circule dans le diffuseur avant d'atteindre directement le tronçon de détente. La première distance, plus importante dans ce secteur angulaire de sortie, permet d'accompagner ce second flux du gaz plus longtemps dans le diffuseur et le long de la première paroi extérieure que dans le secteur d'entrée. Cela permet, bien que le second flux du gaz ne traverse pas la chambre de tranquillisation, une réduction importante de sa vitesse avant son entrée dans le tronçon de détente. De plus, l'angle de tangence aigu plus important dans ce secteur de sortie contribue également à accompagner au mieux le second flux du gaz dans le diffuseur et le long de la première paroi extérieure. En particulier, cet angle de tangence aigu peut permettre au second flux du gaz de rentrer dans le tronçon de détente suivant une direction sensiblement parallèle à la direction moyenne de circulation du gaz dans le tronçon de détente.

Cet angle de tangence aigu plus important permet aussi d'éviter de générer des turbulences du premier flux du gaz sortant de la chambre de tranquillisation. De même, cet angle de tangence aigu peut permettre au premier flux du gaz sortant de la chambre de tranquillisation de rentrer dans le tronçon de détente également suivant une direction sensiblement parallèle à la direction moyenne de circulation du gaz dans le tronçon de détente. De la sorte, le premier flux du gaz et le second flux du gaz se retrouvent dans le tronçon de détente en suivant des directions sensiblement parallèles ce qui permet de limiter l'apparition de turbulences. De plus, la tuyère d'échappement peut permettre au premier flux et au second flux d'avoir des vitesses sensiblement identiques lorsque ces premier et deuxième flux se rejoignent, ce qui permet d'éviter que l'un ralentisse l'autre par effet de viscosité.

La tuyère d'échappement selon l'invention permet ainsi avantageusement de limiter les pertes de charge, ce qui contribue à ne pas dégrader par exemple les performances d'une turbine à gaz reliée à cette tuyère d'échappement.

La tuyère d'échappement selon l'invention peut de plus comporter une ou plusieurs des caractéristiques qui suivent, prises seules ou en combinaison.

Selon une possibilité, la première paroi extérieure peut comporter une paroi d'entrée et une paroi de sortie, la paroi d'entrée s'étendant depuis la section d'entrée jusqu'à la paroi de sortie, la paroi de sortie comprenant l'extrémité libre, la paroi d'entrée ayant une première courbure constante en azimut autour de l'axe, une seconde courbure de la paroi de sortie étant différente en fonction de l'azimut autour de l'axe, les rayons de courbure de la paroi de sortie dans des plans radiaux passant par l'axe étant plus faibles dans le secteur angulaire d'entrée que dans le secteur angulaire de sortie.

De la sorte, le gaz a dans un premier temps un comportement similaire tout autour de l'axe dans le diffuseur, dû à la paroi d'entrée. Ensuite, le comportement du gaz est différent dans les secteurs angulaires d'entrée et de sortie ce qui optimise la circulation des gaz d'échappement, et par suite contribue à réduire la vitesse de ce gaz.

De plus, la courbure de la paroi de sortie et l'angle de tangence aigu peuvent être constants quel que soit l'azimut autour de l'axe dans le secteur angulaire d'entrée. En particulier, l'angle de tangence aigu peut être nul dans le secteur angulaire d'entrée, les tangentes étant alors parallèles à l'axe, dans le secteur angulaire d'entrée, autorisant ainsi un accompagnement du premier flux du gaz, à l'aide de la première paroi extérieure jusqu'au centre de la chambre de tranquillisation.

Selon une possibilité compatible avec les précédentes, le secteur angulaire d'entrée peut couvrir au moins 90°, et le secteur angulaire de sortie peut couvrir au maximum 120°. De plus, deux secteurs intermédiaires peuvent être présents de part et d'autre du secteur angulaire de sortie, chaque secteur intermédiaire étant situé entre le secteur angulaire d'entrée et le secteur angulaire de sortie.

En particulier, le secteur angulaire d'entrée peut couvrir un angle compris entre 180° et 270° autour de l'axe et le secteur angulaire de sortie peut couvrir un angle compris entre 30° et 120° autour de l'axe.

Selon une possibilité compatible avec les précédentes, une seconde distance séparant l'extrémité libre et la première paroi extérieure peut être constante autour de l'axe dans le secteur angulaire d'entrée.

Une telle seconde distance constante dans le secteur angulaire d'entrée, combinée avec la courbure de la paroi de sortie et l'angle de tangence aigu également constants, permet d'avoir une circulation homogène du gaz entre la section d'entrée et la chambre de tranquillisation, ce qui contribue à limiter l'apparition de turbulences et permet donc d'avoir un écoulement sensiblement laminaire du gaz dans ce secteur d'entrée. Ce gaz subit alors peu de pertes de charge tout en réduisant sa vitesse de circulation en traversant le diffuseur.

Selon une possibilité compatible avec les précédentes, la tuyère d'échappement selon l'invention peut comporter un plan de symétrie passant par l'axe. Les secteurs angulaires d'entrée et de sortie sont ainsi répartis de part et d'autre de ce plan de symétrie.

Selon une possibilité compatible avec les précédentes, la première paroi extérieure peut se terminer par un bord tombé au moins dans le secteur angulaire d'entrée.

Ce bord tombé permet, d'une part, d'apporter de la rigidité à la première paroi extérieure et, d'autre part, d'améliorer l'accompagnement du gaz lors de son passage du diffuseur à la chambre de tranquillisation le cas échéant.

En effet, la circulation du gaz entre le diffuseur et la chambre de tranquillisation peut générer des efforts importants sur la première paroi extérieure dont l'extrémité est libre. De plus, au niveau de la première paroi extérieure, il peut éventuellement se produire une séparation brutale de l'écoulement du gaz, générateur de turbulences dans la circulation du gaz. Ces turbulences, outre un effet négatif sur les pertes de charge du gaz, peuvent générer par exemple des vibrations et/ou l'apparition de criques sur cette première paroi extérieure. De plus, des vortex instationnaires peuvent apparaître par exemple à proximité de cette extrémité de la première paroi extérieure, sollicitant alors mécaniquement cette première paroi extérieure.

Par ailleurs, des vibrations peuvent également être transmises à la tuyère d'échappement par la turbine à gaz, voire par l'aéronef, équipée de cette tuyère d'échappement. La première paroi extérieure dont l'extrémité est libre dans la chambre de tranquillisation peut être relativement sensible et fragilisée en présence de ces vibrations.

Avantageusement, ce bord tombé permet d'augmenter la rigidité de cette première paroi extérieure pour, d'une part, résister aux efforts générés sur cette première paroi extérieure par le gaz et aux vibrations induites et, d'autre part, limiter voire éviter l'apparition d'une séparation brutale de l'écoulement du gaz. Le bord tombé permet en effet d'accompagner le fluide en diminuant la zone de séparation quand le fluide quitte le diffuseur. Outre ces propriétés mécaniques, ce bord tombé permet donc avantageusement d'éviter l'apparition d'une zone de turbulences en sortie du diffuseur et de vortex instables, générateurs de turbulences et de pertes de charge du gaz.

De plus, la première paroi extérieure peut également se terminer par un bord tombé formant son extrémité libre dans le secteur angulaire de sortie, la hauteur de ce bord tombé étant plus faible dans le secteur angulaire de sortie que dans le secteur angulaire d'entrée.

En effet, les angles de tangence étant plus importants dans le secteur angulaire de sortie que dans le secteur angulaire d'entrée, voire les rayons de courbure de la paroi de sortie étant également plus importants dans le secteur angulaire d'entrée que dans le secteur angulaire de sortie, la circulation du gaz peut générer des efforts moins importants sur la première paroi extérieure dans le secteur angulaire de sortie que dans le secteur angulaire d'entrée. De fait, le besoin de ce bord tombé est moins important dans le secteur angulaire de sortie que dans le secteur angulaire d'entrée.

De plus, un bord tombé ayant une hauteur plus faible dans le secteur angulaire de sortie permet de limiter l'impact de ce bord tombé sur le premier flux de gaz sortant de la chambre de tranquillisation avant son entrée dans le tronçon de détente. Un bord tombé ayant une hauteur importante est en effet susceptible de perturber le premier flux de gaz et de générer ainsi des turbulences néfastes. Un bord tombé d'une hauteur plus faible dans le secteur angulaire de sortie peut à l'inverse permettre que le premier flux de gaz rejoigne le second flux de gaz de la façon la plus progressive possible.

Alternativement, la première paroi extérieure peut ne pas comporter le bord tombé dans le secteur angulaire de sortie.

Selon une possibilité compatible avec les précédentes, la première paroi intérieure et la première paroi extérieure peuvent être concaves dans le même sens et ne comporter ainsi aucune ligne d'inflexion, et la seconde paroi extérieure peut ne comporter aucune ligne d'inflexion, et la première forme divergente du diffuseur peut évoluer selon une loi d'évolution permettant, d'une part, de réduire progressivement la vitesse du gaz circulant dans le diffuseur et, d'autre part, de retarder le décollement de la couche limite du gaz sur la première paroi intérieure et la première paroi extérieure.

En effet, afin que la superficie de la section de passage augmente progressivement et, par suite, que la réduction de la vitesse de circulation du gaz dans le diffuseur soit progressive, la première paroi intérieure et la première paroi extérieure ont la même concavité. On entend par « même concavité », le fait que les premières parois intérieure et extérieure ont des courbures tournant dans le même sens, c'est-à-dire que les centres de courbure respectifs des premières parois intérieure et extérieure sont situés du même côté de ces premières parois intérieure et extérieure.

La circulation du gaz dans le diffuseur peut ainsi être effectuée majoritairement sans l'apparition de décollement de la couche limite du gaz sur la première paroi intérieure et la première paroi extérieure. Au minimum, ce décollement de la couche limite du gaz sur la première paroi intérieure et la première paroi extérieure est retardé et se situe dans la partie terminale du diffuseur, c'est-à-dire proche de la section de sortie.

Ainsi, les pertes de charge subies par le gaz circulant dans le diffuseur sont réduites.

Après le diffuseur, ce gaz circule dans la chambre de tranquillisation qui permet d'orienter le gaz sortant du diffuseur vers chaque tronçon de détente à laquelle est reliée cette chambre de tranquillisation. L'absence de variation brusque des surfaces au milieu desquelles se fait la circulation du gaz est importante pour qu'un minimum de pertes de charge soit généré lors de ce passage du diffuseur vers la chambre de tranquillisation.

Dans ce but, la seconde paroi extérieure de cette chambre de tranquillisation prolonge la première paroi intérieure du diffuseur de façon continue. De même, cette seconde paroi extérieure de cette chambre de tranquillisation rejoint la première paroi extérieure du diffuseur de façon continue. Ainsi, il y a continuité de la surface complète formée par la première paroi intérieure, la seconde paroi extérieure et la première paroi extérieure. De plus, cette surface complète varie de façon continue, c'est-à-dire que la dérivée de cette surface complète est continue.

De plus, et comme pour les premières parois intérieure et extérieure, la seconde paroi extérieure ne comporte majoritairement aucune ligne d'inflexion. Cependant, cette seconde paroi extérieure peut tout de même comporter une ligne d'inflexion au niveau de la jonction avec la première paroi extérieure du diffuseur. Cette ligne d'inflexion n'a alors que peu d'effet, voire aucun effet, sur l'écoulement du gaz qui se dirige vers chaque ouverture radiale de la chambre de tranquillisation.

Selon une possibilité compatible avec les précédentes, un premier sens est défini au niveau de la section d'entrée parallèlement à l'axe et orienté selon le sens de circulation du gaz, et un second sens est défini parallèlement à une direction moyenne de sortie du gaz du tronçon de détente et orienté selon le sens de circulation du gaz, le tronçon de détente étant agencé afin que le second sens forme avec le premier sens un angle de tuyère compris entre 60° et 180°.

La géométrie particulière de la tuyère d'échappement selon l'invention permet ainsi d'orienter avantageusement le gaz, entrant parallèlement au premier sens, selon une direction moyenne de sortie du gaz par le tronçon de détente sensiblement parallèle au second sens. Cette direction moyenne de sortie du gaz peut former avec le premier sens un angle dit par commodité « angle de tuyère » important, tout en limitant les pertes de charge générées sur le gaz circulant dans la tuyère d'échappement grâce à la géométrie particulière de la tuyère d'échappement. En particulier, le gaz peut être expulsé de la tuyère d'échappement selon l'invention avec un angle supérieur à 90°, voire peut réaliser sensiblement un demi-tour.

Selon une possibilité compatible avec les précédentes, la tuyère d'échappement peut comporter des éléments structurels reliant la première paroi intérieure et la première paroi extérieure.

Ces éléments structurels peuvent notamment permettre de rigidifier la tuyère d'échappement, afin de résister aux contraintes mécaniques, thermiques et/ou vibratoires qu'elle est susceptible de subir.

Les éléments structurels peuvent prendre plusieurs formes pour réduire la trainée aérodynamique générée dans la veine d'air, et peuvent être notamment choisis parmi la liste comportant des tubes, des tiges, des barreaux, des rayons par exemple du type de rayons d'une roue de vélo, ou autres. La minimisation de la trainée aérodynamique générée est intéressante, en particulier lorsque le moteur travaille à faible puissance. A un tel régime, la giration du gaz en entrée de la tuyère d'échappement est importante, et par exemple de l'ordre de plusieurs dizaines de degrés par rapport à l'axe d'écoulement, ce qui peut induire une forte trainée aérodynamique et donc augmenter les pertes de charge. La forme des éléments structurels utilisés pour assurer localement la rigidité de la tuyère d'échappement est alors choisie pour être la moins invasif possible.

Par exemple, les éléments structurels sont équirépartis autour de l'axe.

Par exemple, la tuyère d'échappement peut comporter entre trois et dix éléments structurels.

Par ailleurs, chaque élément structurel peut avoir un profil aérodynamique symétrique, et/ou peut avoir une longueur comprise entre 10 et 50 millimètres (10 à 50 mm).

La tuyère d'échappement selon l'invention permet ainsi de réaliser une diffusion et une orientation d'un gaz, sortant d'une turbine à gaz par exemple, très progressive et sensiblement uniforme, ce gaz étant amené dans le diffuseur et la chambre de tranquillisation, puis éjecté par le tronçon de détente.

Selon une possibilité compatible avec les précédentes, le tronçon de détente peut comporter au moins une paroi périphérique comprenant une bosse pour faire décoller le gaz de cette paroi périphérique.

Le tronçon de détente peut comporter un dispositif pour faire varier la section de passage afin de faire décoller le gaz d'au moins une paroi de manière à optimiser le remplissage en gaz du tronçon de détente, notamment pour optimiser le fonctionnement d'un échangeur thermique alimenté en gaz par la tuyère d'échappement.

En effet, le gaz peut avoir tendance à suivre une paroi, et par exemple une face supérieure du tronçon de détente et dans une moindre mesure les faces latérales du conduit. En effet, le gaz peut être localisé contre la face supérieure et les deux faces latérales, ce qui impose une vitesse élevée. Par conséquent, le gaz peut ne pas avoir le temps d'occuper de façon uniforme le tronçon de détente en raison des dimensions de ce tronçon de détente. Dès lors, chaque bosse peut obliger ce gaz à se décoller d'une face pour occuper tout le volume du tronçon de détente.

Par exemple, une telle bosse peut avoir une hauteur de l'ordre 10 à 50 mm, et éventuellement de l'ordre de 20% de la section de passage. La bosse peut être obtenue en donnant la forme voulue à une paroi ou en accolant à une paroi du tronçon de détente un organe, une plaque par exemple, permettant d'obtenir la paroi périphérique bosselée voulue.

Selon une possibilité compatible avec les précédentes, le tronçon de détente peut comporter au moins un déflecteur.

Un tel déflecteur a pour fonction de guider le gaz, notamment pour optimiser le fonctionnement d'un échangeur thermique alimenté en gaz par la tuyère d'échappement. Plus le gaz occupe de façon homogène le plan de sortie du tronçon de détente, et plus la vitesse moyenne du gaz sera basse, et donc plus les pertes de charge du gaz dans l'échangeur thermique seront basses.

Un tel déflecteur peut comporter une plaque, ou un profil de type ailette par exemple. Un tel déflecteur peut être disposé sensiblement parallèlement à un axe vertical ou horizontal. Par exemple, le tronçon de détente peut comporter un à trois déflecteurs sensiblement horizontaux et un à trois déflecteurs sensiblement verticaux.

La présente invention a également pour objet une installation motrice comportant une turbine à gaz ainsi qu'un échangeur thermique et une tuyère d'échappement telle que précédemment décrite. La turbine à gaz est reliée à la tuyère d'échappement au niveau la section d'entrée annulaire de cette tuyère d'échappement. L'échangeur thermique est en liaison fluidique avec le tronçon de détente de la tuyère d'échappement et la tuyère de sortie. Les gaz d'échappement de chaque turbine à gaz circulent ainsi dans la tuyère d'échappement jusqu'à être éjectés de l'installation motrice après avoir traversés l'échangeur thermique et la tuyère de sortie.

La présente invention a enfin pour objet un aéronef comportant une telle installation motrice.

L'invention et ses avantages apparaîtront avec plus de détails dans le cadre de la description qui suit avec des exemples de réalisation donnés à titre illustratif en référence aux figures annexées qui représentent :
- la figure 1, une vue de dessus d'une tuyère d'échappement selon l'invention,
- la figure 2, une vue en coupe verticale de la tuyère d'échappement de la figure 1,
- la figure 3, une vue en coupe verticale de la tuyère d'échappement de la figure 1,
- la figure 4, une vue en coupe verticale de la tuyère d'échappement de la figure 1,
- la figure 5, une vue en perspective d'un élément de la tuyère d'échappement de la figure 1,
- la figure 6, une vue en coupe d'une tuyère d'échappement de la figure 1,
- la figure 7, une vue en perspective en coupe d'une tuyère d'échappement selon l'invention,
- la figure 8, une vue en coupe verticale de la tuyère d'échappement de la figure 6,
- la figure 9, une vue en coupe verticale de la tuyère d'échappement de la figure 6,
- la figure 10, une vue schématique d'un tronçon de détente comportant au moins une bosse et un déflecteur,
- la figure 11, une vue schématique d'un tronçon de détente comportant au moins une bosse et un déflecteur,
- la figure 12, une vue en perspective d'une installation motrice selon l'invention.

Les éléments présents dans plusieurs figures distinctes sont affectés d'une seule et même référence.

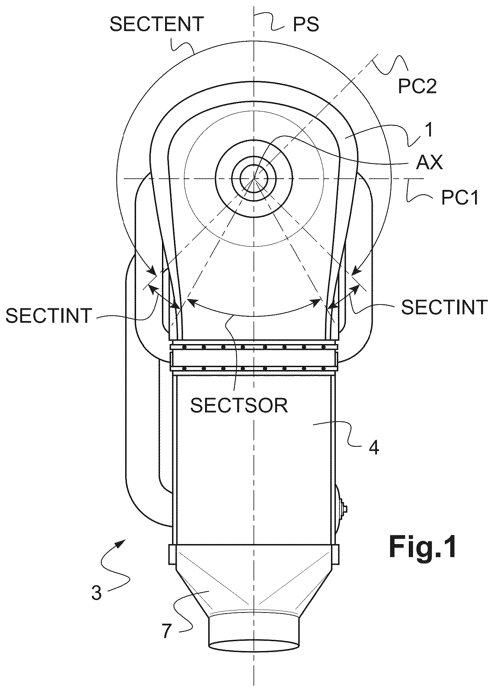

Sur la figure 1, une tuyère d'échappement 1 est représentée en vue de dessus, cette tuyère d'échappement 1 comportant un plan de symétrie PS. Cette tuyère d'échappement 1 peut notamment être associée à une turbine à gaz comportant un axe AX de rotation et faire partie d'une installation motrice destinée à équiper un aéronef.

Cette tuyère d'échappement 1 peut comporter un plan de symétrie PS passant par l'axe AX.

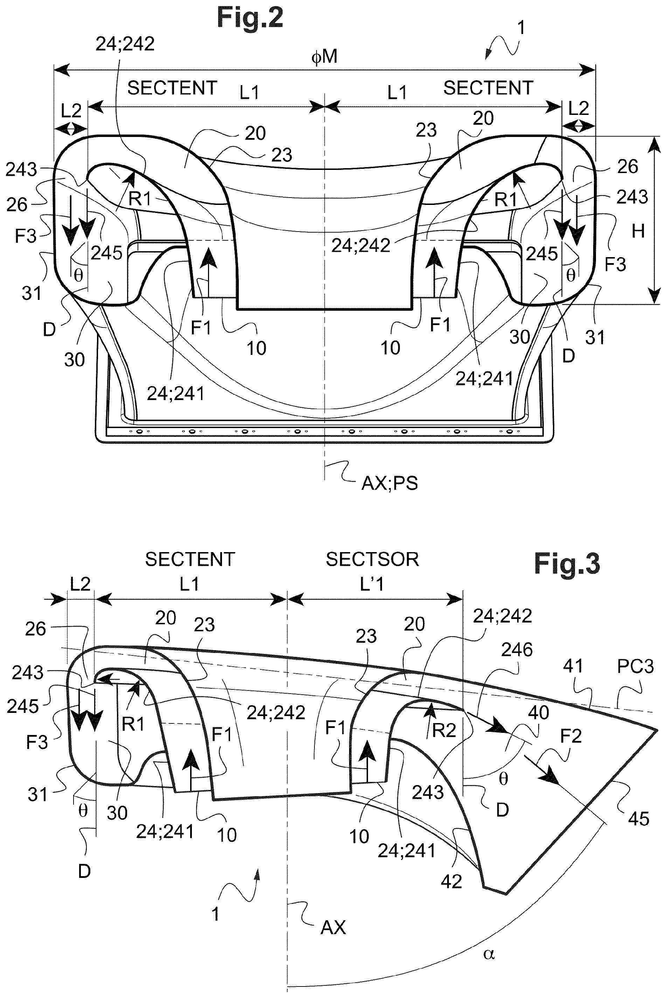

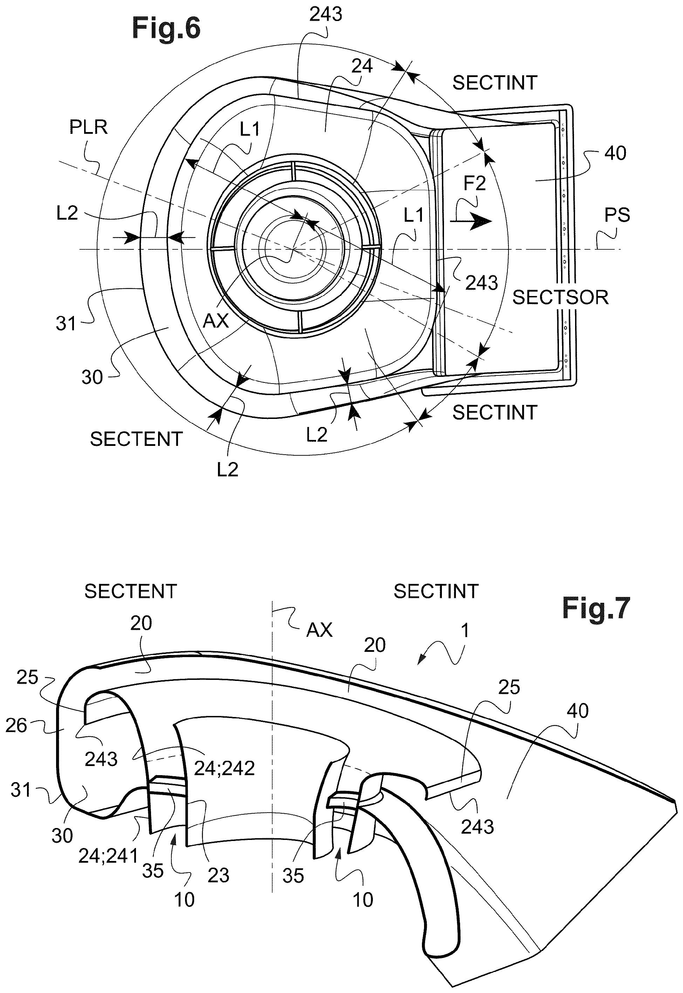

Un premier exemple de réalisation d'une tuyère d'échappement 1 est représenté sur les figures 2 à 6 et un second exemple de réalisation d'une tuyère d'échappement 1 est représenté sur les figures 7 à 9.

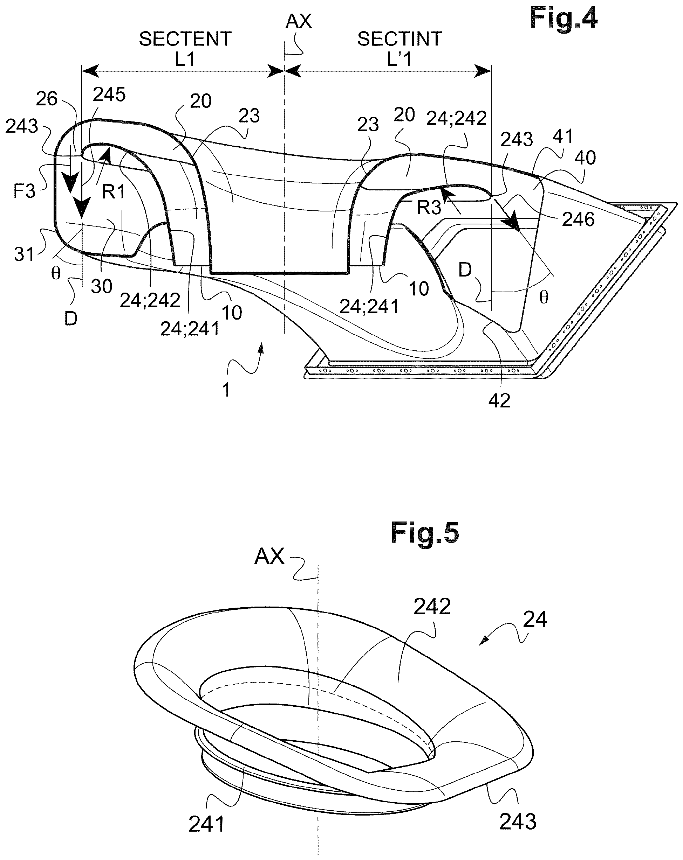

La figure 2 représente une vue en coupe de la tuyère d'échappement 1 selon un premier plan de coupe PC1 perpendiculaire au plan de symétrie PS et passant par l'axe AX. La figure 3 représente une vue en coupe de cette tuyère d'échappement 1 selon le plan de symétrie PS et la figure 4 représente une vue en coupe de cette tuyère d'échappement 1 selon un deuxième plan de coupe PC2 formant par exemple un angle de 45° par rapport au plan de symétrie PS et passant par l'axe AX. Les premier et deuxième plans de coupe PC1,PC2 sont représentés sur la figure 1. La figure 6 représente une vue en coupe de la tuyère d'échappement 1 selon un troisième plan de coupe PC3 visible sur la figure 3.

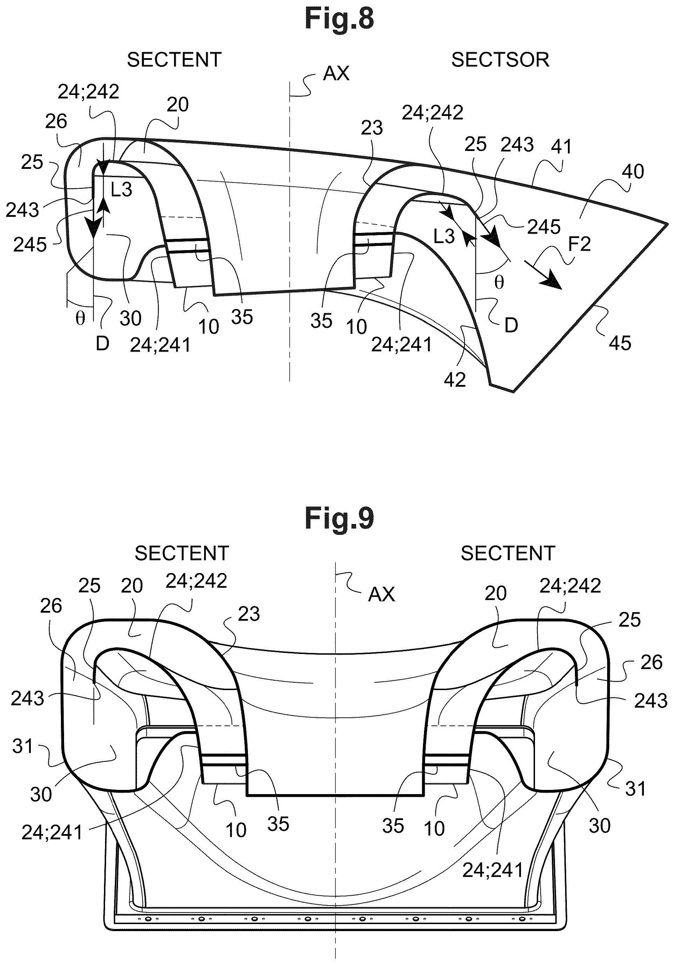

La figure 7 représente une vue perspective et en coupe de la tuyère d'échappement 1 selon le deuxième plan de coupe PC2 alors que la figure 8 et la figure 9 représentent respectivement des vues en coupe de cette tuyère d'échappement 1 selon le premier plan de coupe PC1 et selon le plan de symétrie PS.

De façon commune aux deux exemples de réalisation représentés sur les figures 2 à 9 et à toute réalisation de la tuyère d'échappement 1 selon l'invention, et en référence à la figue 2 à titre illustratif, la tuyère d'échappement 1 comporte une section d'entrée 10 annulaire, un diffuseur 20, une chambre de tranquillisation 30 et un tronçon de détente 40. Un gaz, notamment les gaz d'échappement provenant d'une turbine à gaz, peut entrer dans la tuyère d'échappement 1 par la section d'entrée 10 annulaire, puis circule dans le diffuseur 20, la chambre de tranquillisation 30 et jusqu'au tronçon de détente 40 avant d'être éjecté de la tuyère d'échappement 1.

La tuyère d'échappement 1 s'étend de façon dissymétrique autour de l'axe AX comme cela est visible sur les figures 3, 4 et 6 notamment. Plusieurs secteurs angulaires spécifiques peuvent ainsi être définis autour de l'axe AX. Notamment, un secteur angulaire d'entrée SECTENT et un secteur angulaire de sortie SECTSOR sont par exemple représentés sur la figure 1 et la figure 6, le secteur angulaire d'entrée SECTENT se positionnant à l'opposé du tronçon de détente 40 par rapport à l'axe AX, le secteur angulaire de sortie SECTSOR étant situé en partie dans le tronçon de détente 40. Le secteur angulaire d'entrée SECTENT et le secteur angulaire de sortie SECTSOR peuvent être adjacents, ou séparés par des secteurs angulaires intermédiaires SECTINT comme représentés sur les figures 1 et 6. Chaque secteur angulaire intermédiaire SECTINT forme un secteur de transition entre le secteur angulaire d'entrée SECTENT et le secteur angulaire de sortie SECTSOR.

Le secteur angulaire d'entrée SECTENT couvre au moins 90° autour de l'axe AX, et peut par exemple couvrir un angle entre 180° et 270° autour de cet axe AX. Le secteur angulaire de sortie SECTSOR couvre quant à lui au maximum 120°, et peut couvrir par exemple un angle compris entre 30° et 120°.

En référence à la figure 2, la section d'entrée 10 annulaire est centrée sur l'axe AX confondu par exemple avec l'axe de rotation de la turbine à gaz et appartenant au plan de symétrie PS. Un premier sens F1 est défini parallèlement à l'axe AX vers l'intérieur de la tuyère d'échappement 1. Ce premier sens F1 est ainsi orienté selon le sens d'entrée du gaz dans la tuyère d'échappement 1.

Le diffuseur 20 comporte une première paroi intérieure 23 et une première paroi extérieure 24 ainsi qu'une section de sortie 26 au niveau de la jonction du diffuseur 20 avec la chambre de tranquillisation 30.

De la sorte, les premières parois intérieure 23 et extérieure 24 du diffuseur 20 délimitent une première forme divergente allant de la section d'entrée 10 annulaire jusqu'à la chambre de tranquillisation 30. Ainsi, le gaz circulant entre les premières parois intérieure et extérieure 23,24 est détendu avant de sortir du diffuseur 20 par la section de sortie 26 vers la chambre de tranquillisation 30.

La chambre de tranquillisation 30 est limitée, d'une part, par le diffuseur 20 et plus particulièrement par la première paroi extérieure 24 et la section de sortie 26 et, d'autre part, par une seconde paroi extérieure 31. Cette seconde paroi extérieure 31 prolonge notamment la première paroi intérieure 23 et rejoint la première paroi extérieure 24 dans le secteur angulaire d'entrée SECTENT. Le diffuseur 20 est ainsi en communication fluidique avec la chambre de tranquillisation 30, via la section de sortie 26, essentiellement dans le secteur angulaire d'entrée SECTENT, et avec le tronçon de détente 40 dans le secteur angulaire de sortie SECTSOR. Le diffuseur 20 peut communiquer fluidiquement aussi bien avec la chambre de tranquillisation 30 qu'avec le tronçon de détente 40 dans le secteur angulaire intermédiaire SECTINT le cas échéant comme cela est visible sur la figure 4.

La chambre de tranquillisation 30 débouche quant à elle dans le tronçon de détente 40 dans le secteur angulaire de sortie SECTSOR comme représenté sur la figure 3, et éventuellement également partiellement dans le secteur angulaire intermédiaire SECTINT, le cas échéant comme représenté sur la figure 4.

Le tronçon de détente 40 comporte une première et une seconde paroi de détente 41,42 guidant le gaz jusqu'à une section de détente 45 à travers laquelle le gaz est éjecté hors de la tuyère d'échappement 1. Dans le secteur angulaire de sortie SECTSOR, la première paroi 41 de détente est le prolongement de la première paroi intérieure 23 alors que la seconde paroi de détente 42 rejoint la première paroi extérieure 24 comme représenté sur les figures 3 et 4.

Les première et seconde parois de détente 41,42 forment une seconde forme divergente allant du diffuseur 20 et de la chambre de tranquillisation 30 jusqu'à la section de détente 45. Ainsi, le gaz circulant dans le tronçon de détente 40 est détendu avant d'être éjecté. Un second sens F2 est défini parallèlement à une direction moyenne de sortie du gaz du tronçon de détente 40 et orienté selon le sens de circulation de ce gaz. Ce second sens F2 est sensiblement perpendiculaire à la section de détente 45 sur les exemples représentés sur les figures 3 et 9.

Dans le cadre de l'invention, le second sens F2 peut former avec le premier sens F1 un angle de tuyère *α* compris entre 60° et 180°. De fait, le gaz est éjecté du tronçon de détente 40 sur le côté de la tuyère d'échappement 1 et dans un sens inverse vis-à-vis du premier sens F1 qui correspond sensiblement au sens d'entrée du gaz dans la tuyère d'échappement 1. Selon les exemples représentés, l'angle de tuyère *α* est égal à 135°.

De plus, un troisième sens F3 est défini perpendiculairement à la section de sortie 26 et orienté selon le sens de circulation du gaz. Ce troisième sens F3 forme avec le premier sens F1 un angle égal à 180° selon les exemples représentés.

Par ailleurs, les géométries des premières parois intérieure 23 et extérieure 24 ainsi que de la seconde paroi extérieure 31 peuvent varier en fonction de l'azimut autour de l'axe AX, et sont ainsi différentes en particulier entre les secteurs angulaires d'entrée SECTENT et de sortie SECTSOR comme représenté notamment sur les figures 3 et 4.

Tout d'abord, des plans radiaux PLR passent par l'axe AX comme représenté sur la figure 6. Les plans radiaux PLR coupent ainsi la tuyère d'échappement 1, en tournant autour de l'axe AX. Les premier et deuxième plans de coupe PC1, PC2 ainsi que le plan de symétrie PS sont donc également des plans radiaux PLR. Les figures 2 à 4 forment donc des vues en coupe dans respectivement trois plans radiaux PLR du premier exemple de réalisation de la tuyère d'échappement 1, alors que les figures 7 à 9 forment des vues en coupe dans respectivement trois plans radiaux PLR du second exemple de réalisation de la tuyère d'échappement 1.

Dans chaque plan radial PLR, une première distance L1,L1' sépare l'axe AX et l'extrémité libre 243. Sur la figure 3, dont le premier plan de coupe PC1 est perpendiculaire au plan de symétrie PS, cette première distance L1 est identique de part et d'autre de l'axe AX, qui correspond au plan de symétrie PS. Sur les figures 4 et 5, cette première distance L1,L1' est différente de part et d'autre de l'axe AX, la distance L1' étant supérieure pour l'extrémité libre 243 se trouvant à proximité du tronçon de détente 40. La figure 2 est située entièrement dans le secteur angulaire d'entrée SECTENT, alors que la figure 3 couvre simultanément le secteur angulaire d'entrée SECTENT et le secteur angulaire de sortie SECTSOR, situés respectivement de part et d'autre de l'axe AX et que la figure 4 couvre simultanément le secteur angulaire d'entrée SECTENT et le secteur angulaire intermédiaire SECTINT, situés respectivement de part et d'autre de l'axe AX.

En effet, la partie de la figure 3 à gauche de l'axe AX, et contenant notamment la chambre de tranquillisation 30, est située dans le secteur angulaire d'entrée SECTENT et la partie à droite de l'axe AX, et contenant notamment le tronçon de détente 40, est située dans le secteur angulaire de sortie SECTSOR. De même, la partie de la figure 4 à gauche de l'axe AX, et contenant notamment la chambre de tranquillisation 30, est située dans le secteur angulaire d'entrée SECTENT et la partie à droite de l'axe AX, et contenant notamment le tronçon de détente 40, est située dans le secteur angulaire intermédiaire SECTINT.

Ainsi, la première distance L1,L1' est plus grande dans le secteur angulaire de sortie SECTSOR que dans le secteur angulaire d'entrée SECTENT comme représenté sur la figure 3. Par contre, la première distance L1,L1' peut être plus grande dans le secteur angulaire intermédiaire SECTINT que dans le secteur angulaire d'entrée SECTENT ou être constante comme représenté sur la figure 4.

De plus, dans chaque plan radial PLR, une tangente 245 de la première paroi extérieure 24 à l'extrémité libre 243 est définie et forme avec une direction D parallèle l'axe AX et passant par l'extrémité libre 243 un angle de tangence aigu *θ*. A l'instar de la première distance L1,L1', l'angle de tangence aigu *θ* peut être différent de chaque côté de l'axe AX dans chaque plan radial PLR. En particulier, et comme représenté sur les figures 2 à 4, l'angle de tangence aigu *θ* est plus important dans le secteur angulaire de sortie SECTSOR que dans le secteur angulaire d'entrée SECTENT.

Ces caractéristiques de la tuyère d'échappement 1 selon l'invention contribuent à limiter les pertes de charge du gaz traversant la tuyère d'échappement 1 en permettant d'adapter la géométrie de la première paroi extérieure 24 en fonction du parcours du gaz, et notamment s'il passe par la chambre de tranquillisation 30 ou non.

Ainsi et en référence notamment à la figure 2, un premier flux du gaz suit cette première paroi extérieure 24 et est orienté vers la chambre de tranquillisation 30.

Ce premier flux du gaz subit une première réduction de vitesse dans le diffuseur 20, puis est dirigé sensiblement vers le centre de la chambre de tranquillisation 30 en faisant sensiblement un demi-tour par rapport au premier sens F1. Ce premier flux du gaz subit alors une seconde réduction de vitesse dans la chambre de tranquillisation 30 tout en étant dirigé vers le tronçon de détente 40. Ce premier flux du gaz entre alors dans le tronçon de détente 40 dans le secteur angulaire sortie SECTSOR, dans lequel l'angle de tangence *θ* est plus important. L'extrémité libre 243 ne constitue alors pas un obstacle susceptible de générer des turbulences dans ce secteur angulaire sortie SECTSOR, et par suite des pertes de charge importantes. Ce premier flux du gaz entre ainsi dans le tronçon de détente 40 en ayant une vitesse réduite, sans avoir généré des pertes de charge importantes et en ayant orienté le gaz selon le second sens F2.

En référence à la figure 3, un second flux du gaz passe quant à lui directement du diffuseur 20 au tronçon de détente 40 sans traverser la chambre de tranquillisation 30. La première distance L1,L1' plus importante dans le secteur angulaire de sortie SECTSOR que dans le secteur angulaire d'entrée SECTENT permet alors d'avoir un accompagnement important de ce second flux du gaz, qui suit cette première paroi extérieure 24 ce qui permet de réduire sa vitesse de façon plus importante que dans le secteur angulaire d'entrée SECTENT. De plus, l'angle de tangence aigu *θ* plus important dans le secteur angulaire de sortie SECTSOR contribue également à maximiser l'accompagnement du gaz et à orienter ce second flux du gaz selon une direction proche du second sens F2, limitant ainsi l'apparition de turbulences.

En conséquence, les premier et second flux du gaz, bien que suivant des cheminements différents, entrent dans le tronçon de détente 40 à des vitesses proches et selon des directions sensiblement parallèles, ce qui contribuent également à limiter l'apparition de turbulences, et par suite, de pertes de charge.

En référence aux figures 2 et 3, la tangente 245 de la première paroi extérieure 24 dans le secteur angulaire d'entrée SECTENT est sensiblement parallèle à la direction D et, de fait, au premier sens F1, l'angle de tangence aigu *θ* étant nulle ou proche de zéro, alors que la tangente 245 de la première paroi extérieure 24 dans le secteur angulaire de sortie SECTSOR est sensiblement parallèle au second sens F2, l'angle de tangence aigu *θ* étant sensiblement égal à l'angle de tuyère *α*.

Par ailleurs, et en référence aux figures 2 et 3, la première paroi extérieure 24 peut comporter une paroi d'entrée 241 et une paroi de sortie 242. La paroi d'entrée 241 démarre à la section d'entrée et s'étend jusqu'à la paroi de sortie 242, la paroi de sortie 242 s'étendant jusqu'à l'extrémité libre 243. La paroi d'entrée 241 possède une première courbure constante en azimut autour de l'axe AX. Cette paroi d'entrée 241 est donc une forme de révolution autour de l'axe AX. La paroi de sortie 242 possède une seconde courbure qui peut être différente en fonction de l'azimut autour de l'axe AX, les rayons de courbure dans chaque plan radial PLR de cette paroi de sortie 242 étant plus faibles dans le secteur angulaire d'entrée SECTENT que dans le secteur angulaire de sortie SECTSOR.

Ainsi, l'entrée du gaz est identique à 360° autour de l'axe AX le long de la paroi d'entrée 241. Ensuite, le cheminement du gaz est avantageusement adapté selon que le gaz traverse ou non la chambre de tranquillisation 30. En particulier, des rayons de courbure de la paroi de sortie 242 plus importants dans le secteur angulaire de sortie SECTSOR contribuent à améliorer l'accompagnement du second flux du gaz, avant son entrée dans le tronçon de détente 40.

Le diffuseur 20 et la chambre de tranquillisation 30 s'étendent ainsi au moins partiellement autour de l'axe AX dans le secteur angulaire d'entrée SECTENT, et débouchent dans le tronçon de détente 40 dans le secteur angulaire de sortie SECTSOR.

De plus, la courbure de la paroi de sortie 242 peut être identique quel que soit l'azimut autour de l'axe AX dans le secteur angulaire d'entrée SECTENT. De façon complémentaire ou alternative, l'angle de tangence aigu *θ* peut être identique quel que soit l'azimut autour de l'axe AX dans le secteur angulaire d'entrée SECTENT. Le comportement du premier flux du gaz peut alors être sensiblement identique dans tout le secteur angulaire d'entrée SECTENT.

En outre, une seconde distance L2 sépare l'extrémité libre 243 et la première paroi extérieure 24. Cette seconde distance L2 peut être constante autour de l'axe AX dans le secteur angulaire d'entrée SECTENT. Cette seconde distance L2 peut ensuite rester constante ou augmenter progressivement dans le secteur angulaire intermédiaire SECTINT.

Cette seconde distance L2 constante dans le secteur angulaire d'entrée SECTENT permet également d'obtenir un comportement du premier flux du gaz sensiblement identique dans tout le secteur angulaire d'entrée SECTENT, et de limiter ainsi l'apparition de turbulences dans la chambre de tranquillisation 30, et par suite, l'apparition de pertes de charge.

De plus, la première paroi intérieure 23 et la première paroi extérieure 23 sont concaves dans le même sens et ne comportent aucune ligne d'inflexion, et la seconde paroi extérieure 31 ne comporte aucune ligne d'inflexion. De la sorte, la première forme divergente du diffuseur 20 évolue selon une loi d'évolution permettant, d'une part, de réduire progressivement la vitesse du gaz circulant dans le diffuseur 20 et, d'autre part, de retarder le décollement de la couche limite du gaz sur la première paroi intérieure 23 et la première paroi extérieure 24, maximisant ainsi la réduction de vitesse du fluide, tout en limitant l'apparition de pertes de charge.

De plus, les courbures de la première paroi intérieure 23, de la seconde paroi extérieure et de la première paroi extérieure 24 varient de façon continue. De fait, la superficie de la section de passage du gaz dans cette première forme divergente augmente progressivement de la section d'entrée 10 annulaire vers la chambre de tranquillisation 30.

Par ailleurs, la tuyère d'échappement 1 est de préférence réalisée à partir de tôles fines, par exemple en acier ou bien en alliages spéciaux. Ces tôles fines doivent notamment résister aux hautes températures lorsque la tuyère d'échappement 1 équipe une turbine à gaz 5, les gaz d'échappement de cette turbine à gaz 5 circulant alors dans la tuyère d'échappement 1 à très hautes températures.

La tuyère d'échappement 1 selon l'invention permet ainsi de diffuser les gaz d'échappement, en sortie d'une turbine à gaz par exemple, progressivement en leur faisant faire un virage important, tout en minimisant les pertes de charge. De plus la géométrie particulière de cette tuyère d'échappement 1 permet d'obtenir une tuyère compacte, notamment axialement. En effet, la hauteur H de la tuyère d'échappement 1 peut être nettement inférieure à son diamètre apparent maximal ØM. Par exemple, la hauteur H peut être au moins deux fois inférieure à ce diamètre maximum ØM.

De plus, selon l'exemple de tuyère d'échappement 1 représenté sur les figures 7 à 9, la première paroi extérieure 24 peut comporter un bord tombé 25 à l'extrémité libre 243 et au moins dans le secteur angulaire d'entrée SECTENT. Ce bord tombé 25 permet, d'une part, d'augmenter la rigidité de la première paroi extérieure 24 et, d'autre part, d'améliorer le passage du gaz du diffuseur 20 à la chambre de tranquillisation 30 en l'accompagnant plus longtemps.

La première paroi extérieure 24 peut également comporter un bord tombé 25 dans le secteur angulaire de sortie SECTSOR, et le cas échéant dans le secteur angulaire intermédiaire SECTINT. Dans ce cas, la hauteur du bord tombé 25 peut être plus faible dans le secteur angulaire de sortie SECTSOR que dans le secteur angulaire d'entrée SECTENT, afin d'éviter ou de limiter l'apparition de turbulences.

Alternativement, la première paroi extérieure 24 ne comporte aucun bord tombé dans le secteur angulaire de sortie SECTSOR.

Indépendamment de la présence ou de l'absence de bord tombé, selon l'exemple de tuyère d'échappement 1 représenté sur les figures 7 à 9, la tuyère d'échappement 1 peut comporter des éléments structurels 35 reliant la première paroi intérieure 23 et la première paroi extérieure 24. Ces éléments structurels 35 peuvent notamment permettre à la tuyère d'échappement 1 de résister à des contraintes importantes, aussi bien mécaniques, thermiques que vibratoires.

Ces éléments structurels 35 sont de préférence équirépartis autour de l'axe AX. Les dimensions de ces éléments structurels 35 peuvent rester limitées pour ne pas pénaliser la circulation du gaz, ni générer de pertes de charge importantes. Ces éléments structurels 35 peuvent comporter des tubes, de section circulaire ou polygonale par exemple, des tiges, ou encore des barreaux de section triangulaire ou rectangulaire par exemple.

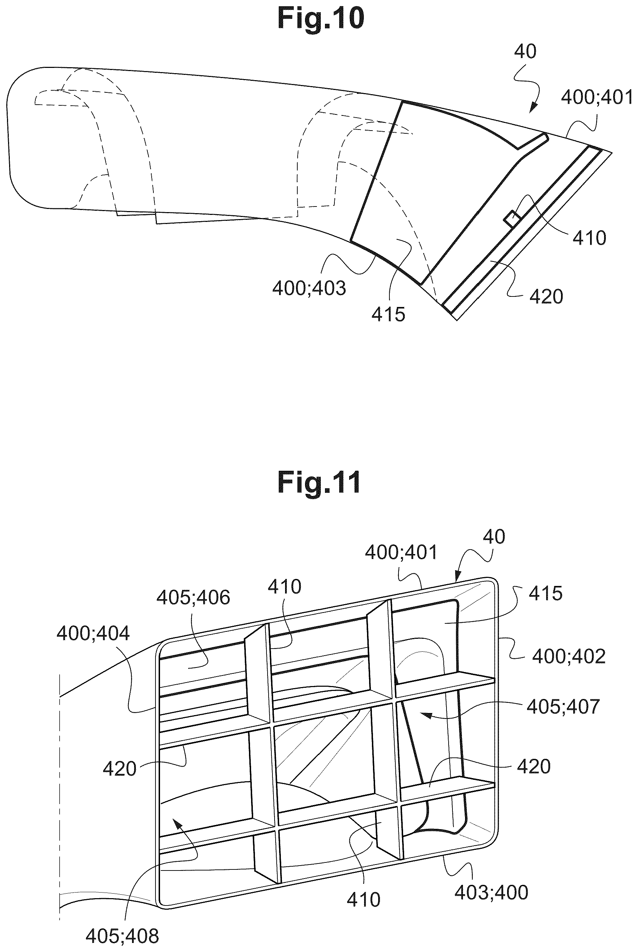

Selon un autre aspect et en référence aux figures 10 et 11, le tronçon de détente 40 comporte des parois périphériques 400 délimitant un volume traversé par le gaz. La référence 400 désigne n'importe quelle paroi périphérique, les références 401 à 404 désignant des parois périphériques particulières.

Eventuellement, au moins une paroi périphérique 400 comprend une bosse 405 pour faire décoller le gaz de cette paroi périphérique. La référence 405 désigne n'importe quelle bosse, les références 406 à 408 désignant des bosses particulières. Chaque bosse 405 représente un déviateur permettant de faire décoller un flux collé à une paroi.

Selon l'exemple donné, la paroi périphérique supérieure 401 et les deux parois périphériques 402, 403 comportent des bosses 406-408 respectives.

Selon un exemple, au moins une paroi périphérique 400 comporte une paroi mise en forme pour présenter la bosse 405 voulue.

Selon l'exemple représenté, chaque paroi périphérique 400 comporte une paroi, et un organe additionnel 415 fixé à la paroi pour former la bosse 405 voulue. Selon l'exemple représenté, organe additionnel 415 a une forme en U permettant de ménager des bosses 405 sur trois côtés.

En complément ou de manière alternative, le tronçon de détente 40 peut comporter au moins un déflecteur 410, 420. Par exemple une première variante avec un unique déflecteur 410 sensiblement horizontal et un unique déflecteur 420 sensiblement vertical est représentée sur la figure 10, et une seconde variante avec deux déflecteurs 410 sensiblement horizontaux et deux déflecteurs 420 sensiblement verticaux est représentée sur la figure 11.

Un tel déflecteur 410, 420 peut comporter une plaque, ou un profil de type ailette par exemple. Par exemple, le tronçon de détente 40 peut comporter au moins un déflecteur 410 s'étendant selon une direction, et par exemple une direction sensiblement horizontale ou verticale lorsque la turbine à gaz est dans un véhicule reposant sur un sol horizontal. Par exemple, le tronçon de détente 40 peut comporter un à trois déflecteurs s'étendant selon une première direction éventuellement sensiblement horizontal, et/ou un à trois déflecteurs s'étendant selon une autre direction éventuellement sensiblement verticale.

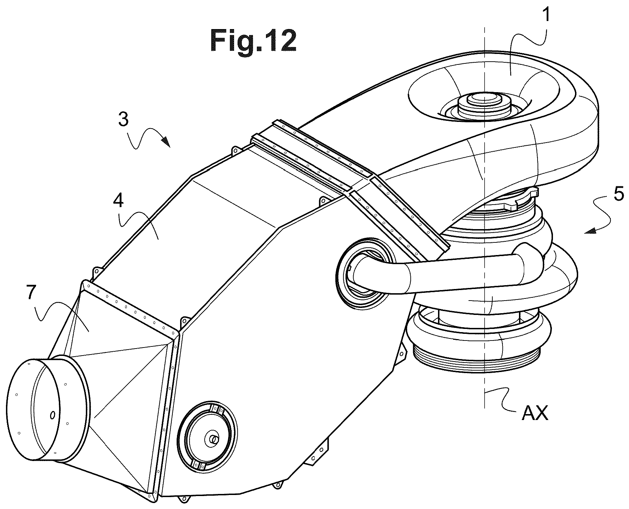

Enfin, une turbine à gaz 5 peut être associée à la tuyère d'échappement 1 pour former une installation motrice 3 comme représentée sur la figure 12. Une telle installation motrice 3 peut également comporter un échangeur thermique 4 et une tuyère de sortie 7, l'échangeur thermique 4 étant positionné entre le tronçon de détente 40 et la tuyère de sortie 7. Cette tuyère de sortie 7 peut comporter un coude afin d'orienter le gaz vers la direction d'éjection désirée. Ainsi, les gaz d'échappement sortants de la turbine à gaz 5 circulent dans la tuyère d'échappement 1 jusqu'à être éjectés par l'intermédiaire de la tuyère de sortie 7. La tuyère d'échappement 1 permet ainsi d'orienter ces gaz d'échappement vers cette direction d'éjection tout en limitant les pertes de charge subies par ces gaz d'échappement, préservant ainsi les performances de la turbine à gaz 5.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Tuyère d'échappement (1) destinée à une turbine à gaz (2), ladite tuyère d'échappement (1) comportant successivement selon le sens de circulation d'un gaz au travers de ladite tuyère d'échappement (1) :
- une section d'entrée (10) annulaire et centrée sur un axe (AX),
- un diffuseur (20) s'étendant autour dudit axe (AX) selon une première forme divergente allant de ladite section d'entrée (10) vers une chambre de tranquillisation (30), ledit diffuseur (20) comportant une première paroi intérieure (23) et une première paroi extérieure (24), ledit gaz circulant entre lesdites premières parois intérieure et extérieure (23,24), ladite première paroi extérieure (24) s'étendant depuis ladite section d'entrée (10) jusqu'à une extrémité libre (243),ladite chambre de tranquillisation (30) étant délimitée par ladite première paroi extérieure (24) et une seconde paroi extérieure (31) prolongeant ladite première paroi intérieure (23), et
- un tronçon de détente (40) communiquant à une première extrémité avec ladite chambre de tranquillisation (30) et ledit diffuseur (20),
une première distance (L1) séparant ledit axe (AX) et ladite extrémité libre (243) dans chaque plan radial (PLR) passant par ledit axe (AX), cette première distance (L1) étant plus faible dans un secteur angulaire d'entrée (SECTENT) opposé audit tronçon de détente (40) par rapport audit axe (AX) que dans un secteur angulaire de sortie (SECTSOR), ledit diffuseur (20) débouchant dans ladite chambre de tranquillisation (30) via une section de sortie (26) dans ledit secteur angulaire d'entrée (SECTENT), le diffuseur (20) et ladite chambre de tranquillisation (30) débouchant dans ledit tronçon de détente (40) dans ledit secteur angulaire de sortie (SECTSOR),
une tangente (245,246) de ladite première paroi extérieure (24) à ladite extrémité libre (243) dans lesdits plans radiaux (PLR) forme avec une direction (D) parallèle audit axe (AX) un angle de tangence aigu (θ) plus faible dans ledit secteur angulaire d'entrée (SECTENT) que dans ledit secteur angulaire de sortie (SECTSOR),
ladite première paroi extérieure (24) comportant une paroi d'entrée (241) et une paroi de sortie (242), ladite paroi d'entrée (241) s'étendant depuis ladite section d'entrée (10) jusqu'à ladite paroi de sortie (242), ladite paroi de sortie (242) comprenant ladite extrémité libre (243), ladite paroi d'entrée (241) ayant une première courbure constante en azimut autour dudit axe (AX), une seconde courbure de ladite paroi de sortie (242) étant différente en fonction de l'azimut autour dudit axe (AX), les rayons de courbure de ladite paroi de sortie (242) dans des plans radiaux (PLR) passant par ledit axe (AX) étant plus faibles dans ledit secteur angulaire d'entrée (SECTENT) que dans ledit secteur angulaire de sortie (SECTSOR),
**caractérisée en ce que** la courbure de ladite paroi de sortie (242) est constante quel que soit l'azimut autour dudit axe (AX) dans ledit secteur angulaire d'entrée (SECTENT), et ledit angle de tangence aigu (*θ*) constant est quel que soit l'azimut autour dudit axe (AX) dans ledit secteur angulaire d'entrée (SECTENT).

2. Tuyère d'échappement (1) selon la revendication 1,
dans laquelle lesdites tangentes (245,246) sont parallèles audit axe (AX) dans ledit secteur angulaire d'entrée (SECTENT).

3. Tuyère d'échappement (1) selon l'une quelconque des revendications 1 à 2,
dans laquelle ledit secteur angulaire d'entrée (SECTENT) couvre au moins 90°, et ledit secteur angulaire de sortie (SECTSOR) couvre au maximum 120°, deux secteurs intermédiaires (SECTINT) étant présents de part et d'autre dudit secteur angulaire de sortie (SECTSOR), chaque secteur intermédiaire (SECTINT) étant situé entre ledit secteur angulaire d'entrée (SECTENT) et ledit secteur angulaire de sortie (SECTSOR).

4. Tuyère d'échappement (1) selon l'une quelconque des revendications 1 à 2,
dans laquelle ledit secteur angulaire d'entrée (SECTENT) couvre un angle compris entre 180° et 270° autour dudit axe (AX) et ledit secteur angulaire de sortie (SECTSOR) couvre un angle compris entre 30° et 120° autour dudit axe (AX).

5. Tuyère d'échappement (1) selon l'une quelconque des revendications 1 à 4,
dans laquelle une seconde distance (L2) séparant ladite extrémité libre (243) et ladite première paroi extérieure (24) est constante autour dudit axe (AX) dans ledit secteur angulaire d'entrée (SECTENT).

6. Tuyère d'échappement (1) selon l'une quelconque des revendications 1 à 5, comportant un plan de symétrie (PS) passant par ledit axe (AX).

7. Tuyère d'échappement (1) selon l'une quelconque des revendications 1 à 6,
dans laquelle ladite la première paroi extérieure (24) se termine par un bord tombé (25) au moins dans ledit secteur angulaire d'entrée (SECTENT).

8. Tuyère d'échappement (1) selon la revendication 7,
dans laquelle ladite la première paroi extérieure (24) se termine par un bord tombé (25) formant son extrémité libre (243) dans ledit secteur angulaire de sortie (SECTSOR) et ladite hauteur dudit bord tombé (25) est plus faible dans ledit secteur angulaire de sortie (SECTSOR) que dans ledit secteur angulaire d'entrée (SECTENT).

9. Tuyère d'échappement (1) selon la revendication 7,
dans laquelle ladite la première paroi extérieure (24) ne comporte pas ledit bord tombé (25) dans ledit secteur angulaire de sortie (SECTSOR).

10. Tuyère d'échappement (1) selon l'une quelconque des revendications 1 à 9,
dans laquelle ladite première paroi intérieure (23) et ladite première paroi extérieure (24) sont concaves dans le même sens et ne comportent aucune ligne d'inflexion, et ladite seconde paroi extérieure (31) ne comporte aucune ligne d'inflexion, et ladite première forme divergente dudit diffuseur (20) évolue selon une loi d'évolution permettant d'une part de réduire progressivement la vitesse dudit gaz circulant dans ledit diffuseur (20) et d'autre part de retarder le décollement de la couche limite dudit gaz sur ladite première paroi intérieure (23) et ladite première paroi extérieure (24).

11. Tuyère d'échappement (1) selon l'une quelconque des revendications 1 à 10,
dans laquelle un premier sens (F1) est défini au niveau de ladite section d'entrée (10) parallèlement audit axe (AX) et orienté selon ledit sens de circulation dudit gaz, et un second sens (F2) es défini parallèlement à une direction moyenne de sortie dudit gaz de ledit tronçon de détente (40) et orienté selon ledit sens de circulation dudit gaz, ledit tronçon de détente (40) étant agencée afin que ledit second sens (F2) forme avec ledit premier sens (F1) un angle de tuyère (*α*) compris entre 60° et 180°.

12. Tuyère d'échappement (1) selon l'une quelconque des revendications 1 à 11,
dans laquelle ladite tuyère d'échappement (1) comporte des éléments structurels (35) reliant ladite première paroi intérieure (23) et ladite première paroi extérieure (24).

13. Tuyère d'échappement (1) selon la revendication 12,
dans laquelle lesdits éléments structurels (35) sont équirépartis autour dudit axe (AX), et sont choisis parmi la liste comportant des tubes, des tiges, des barreaux.

14. Tuyère d'échappement (1) selon l'une quelconque des revendications 1 à 13,
dans laquelle ledit tronçon de détente (40) comporte au moins une paroi périphérique (400) comprenant une bosse (405) pour faire décoller ledit gaz de cette paroi périphérique (400).

15. Tuyère d'échappement (1) selon l'une quelconque des revendications 1 à 14,
dans laquelle ledit tronçon de détente (40) comporte au moins un déflecteur (410, 420).

16. Installation motrice (8) comportant une turbine à gaz (2) ainsi qu'un échangeur thermique (4) et une tuyère d'échappement (1) selon l'une quelconque des revendications 1 à 15 et au moins une tuyère de sortie (50), ladite turbine à gaz (2) étant reliée à ladite tuyère d'échappement (1) au niveau de ladite section d'entrée (10) de ladite tuyère d'échappement (1), ledit échangeur thermique (4) étant en liaison fluidique avec ledit tronçon de détente (40) de ladite tuyère d'échappement (1) et ladite tuyère de sortie (50).
